# EUROPÄISCHE PATENTSCHRIFT

(11) **EP 1 364 152 B1**
(45) Veröffentlichungstag und Bekanntmachung des Hinweises auf die Patenterteilung: **26.04.2006**
(21) Anmeldenummer: 02701283.0
(22) Anmeldetag: 18.02.2002
(51) Int. Cl.: F17C 5/02, F17C 5/04, F17C 5/06

(54) **VERFAHREN UND VORRICHTUNG ZUM BEFÜLLEN VON DRUCKBEHÄLTERN MIT TIEFSIEDENDEN PERMANENTEN GASEN ODER GASGEMISCHEN**
METHOD AND DEVICE FOR FILLING PRESSURE CONTAINERS WITH LOW-BOILING PERMANENT GASES OR GAS MIXTURES
PROCEDE ET DISPOSITIF DE REMPLISSAGE DE RESERVOIRS SOUS PRESSION A L'AIDE DE GAZ OU DE MELANGES DE GAZ PERMANENTS A BAS POINT D'EBULLITION

(30) Priorität: 20.02.2001 DE 10107895
(43) Veröffentlichungstag der Anmeldung: 26.11.2003
(73) Patentinhaber: Air Liquide Deutschland GmbH, 40235 Düsseldorf (DE)
(72) Erfinder: KESTEN, Martin, 51503 Roesrath (DE); MICHEL, Friedel, 40699 Erkrath (DE)
(74) Vertreter: Kahlhöfer, Hermann
(86) Internationale Anmeldenummer: PCT/EP2002/001710
(87) Internationale Veröffentlichungsnummer: WO 2002/066884

(56) Entgegenhaltungen:
- EP-A- 0 033 386
- DE-A- 19 817 324
- US-A- 1 414 359
- US-A- 5 837 027
- PATENT ABSTRACTS OF JAPAN vol. 012, no. 212 (M-710), 17. Juni 1988 (1988-06-17) & JP 63 013999 A (NICHIGOU ASECHIREN KK), 21. Januar 1988 (1988-01-21)
- PATENT ABSTRACTS OF JAPAN vol. 007, no. 055 (M-198), 5. März 1983 (1983-03-05) & JP 57 200793 A (SAGAMI ASECHIREN KK), 9. Dezember 1982 (1982-12-09)
- PATENT ABSTRACTS OF JAPAN vol. 006, no. 207 (M-165), 19. Oktober 1982 (1982-10-19) & JP 57 114096 A (MITSUBISHI JUKOGYO KK), 15. Juli 1982 (1982-07-15)

## Beschreibung

Die Erfindung betrifft ein Verfahren zum Befüllen von Druckbehältern mit tiefsiedenden permanenten Gasen oder Gasgemischen.

Mit dem Begriff "permanente Gase oder Gasgemische" sollen hier solche Gase oder Gasgemische bezeichnet werden, die aufgrund der Lage ihrer kritischen Temperatur bei Raumtemperatur durch Druckerhöhung allein nicht zu verflüssigen sind. Von besonderer wirtschaftlicher Bedeutung sind dabei insbesondere Wasserstoff und Erdgas, die beispielsweise als Energielieferanten in Fahrzeugtanks für Brennstoffzellen - Antriebe Verwendung finden.

Um Gase mit einer hohen Speicherdichte lagern zu können, erfolgt die Speicherung entweder in flüssigem Zustand oder gasförmig unter hohen Drücken. Die Lagerung im flüssigen Zustand ermöglicht zwar eine sehr hohe Speicherdichte, sie ist jedoch nur unter Inkaufnahme mehr oder minder großer Abdampfverluste möglich, die auch bei gut wärmeisolierten Behältern unvermeidlich sind.

Zur Druckspeicherung von Gasen wurden bislang überwiegend Kompressoren eingesetzt, die einen Betriebsdruck im Druckbehälter von etwa 200 bar erlauben. Die Kompressoren sind jedoch in Bau und Betrieb sehr aufwendig, zudem führen neuere Anwendungen, insbesondere in der Brennstoffzellentechnik, zum Bedürfnis nach weitaus höheren Drücken von 700 bar oder mehr. Derartige Drücke sind mit konventioneller Kompressionstechnik nicht oder nur mit unvertretbar hohem Aufwand zu realisieren.

Einen Ausweg bietet das Verfahren der kalten Abfüllung, das beispielsweise in der EP-0 033 386 A1 oder der WO 99/5465 beschrieben ist. Dabei wird das in den Druckbehälter einzufüllende Gas vor dem Befüllen verflüssigt oder auf eine Temperatur, die nur geringfügig oberhalb seines Siedepunktes liegt, abgekühlt. Als bevorzugtes Kühlmittel dient dabei flüssiger Stickstoff. Da sich das Gasvolumen beim Abkühlen (bei gleichbleibendem Druck) ungefähr proportional zur Temperatur verhält, gelingt auf diese Weise eine Vergrößerung der effektiven Speicherkapazität um einen Faktor von ca. 2-3. Da beim Erwärmen des Behälters der Innendruck stark ansteigt, ist entweder eine gute Isolation des Behälters erforderlich, oder die Behälter müssen für hohe Innendrücke konzipiert sein.

Die bekannten Verfahren, die mit kalter Abfüllung arbeiten, sind mit wesentlichen Nachteilen behaftet. Einerseits ist die Verflüssigung von Wasserstoff nur mit einem sehr hohen Aufwand möglich. Die Befüllung des Druckbehälters mit kaltem Gas führt andererseits bereits während des Befüllvorgangs durch den Kontakt mit dem zu befüllenden Druckbehälter zu einer Erwärmung und damit zu einer Ausdehnung des Gases, wodurch die anschließende Druckerhöhung und damit die erzielbare Speicherkapazität deutlich reduziert wird.

Aufgabe der vorliegenden Erfindung ist demnach, ein kostengünstiges Verfahren zum Befüllen eines Druckbehälters mit Gas anzugeben, das die Speicherung unter hohen Drücken erlaubt.

US 5.837.027 wird als nächstliegender Stand der Technik angesehen, und entspricht dem einleitenden Teil des Anspruches 1.

Gelöst ist diese Aufgabe durch ein Verfahren mit den Merkmalen des kennzeichnenden Teils des Patentanspruchs 1.

Erfindungsgemäß, wird also der Druckbehälter vor oder während der Zuführung eines Füllgases gekühlt. Das Füllgas kühlt sich so beim Einfüllen an der Behälterwand stark ab und reduziert sein Volumen. Da der Druckbehälter gekühlt ist, erfolgt - im Unterscheid zu Kaltabfüllverfahren nach dem Stande der Technik - keine teilweise Aufhebung der Verdichtung durch den Kontakt des Füllgases mit dem Druckbehälter während des Befüllvorgangs. Dadurch kann bei der nachfolgenden Erwärmung des Druckbehälters ein Anstieg des Innendruckes um bis zum Fünffachen des Fülldrucks erzielt werden.

Das Füllgas kann sowohl in warmem als auch in gekühltem Zustand dem Druckbehälter zugeführt werden. Bei einer Vorkühlung des Druckbehälters kann jedoch die effektive Speicherkapazität weiter erhöht werden. Eine geeignete Kühlung kann beispielsweise durch flüssigen Stickstoff erfolgen.

Die erreichbare Speicherkapazität wird maßgeblich durch den Druck des Füllgases beim Einfüllen bestimmt. Bei Fülldrücken oberhalb von 100bar und einer Temperatur von 77K (-196 °C) sind beim erfindungsgemäßen Verfahren Druckerhöhungen um etwa das Fünffache erreichbar. Steht das Füllgas beim Einfüllen unter Druck von beispielsweise 200 bis 250 bar, können auch in modernen Verbundbehältern erlaubte Innendrücke von 1000 bis über 1200bar erzielt werden.

Besonders vorteilhaft ist es, den Druckbehälter vor der Zuführung des Füllgases in einem Kältemittelbad mit flüssigem Stickstoff zu kühlen und dabei auf einen Temperatur zu bringen, die zumindest annähernd der Temperatur des flüssigen Stickstoffs entspricht.

Vorzugsweise wird das Füllgas durch den Wärmekontakt mit dem Druckbehälter und/oder im Vorkühler auf eine Temperatur gebracht, die oberhalb seines Siedepunktes liegt, das Füllgas wird also in gasförmigem Zustand eingefüllt. Die insbesondere beim Wasserstoff sehr aufwendige Verflüssigung des Füllgases ist somit entbehrlich.

Eine entsprechende Vorrichtung weist ein Kältemittelbad auf, das mit einem Kühlmittel, beispielsweise Stickstoff, befüllbar ist und das zur lösbaren Aufnahme wenigstens eines Druckbehälters geeignet ist. Des weiteren weist die erfindungsgemäße Vorrichtung eine Füll-Leitung zum Befüllen des oder der Druckbehälter mit einem Füllgas, beispielsweise Wasserstoff auf, die mit einem Füllgasvorrat, etwa einem Tank, einer Leitung oder einer Gaserzeugungseinrichtung, strömungsverbunden und mit einem Anschluss zum lösbaren Verbinden mit dem Druckbehälter ausgerüstet ist.

Als Füllgasvorrat zur Befüllung von Druckbehältern mit Wasserstoff ist in einer bevorzugten Ausführungsform ein Wasserstoff-Mitteldrucktank vorgesehen, der die langzeitige Speicherung von Wasserstoff in flüssigem Zustand erlaubt.

Zweckmäßigerweise durchläuft die Füll-Leitung zwischen dem Füllgasvorrat und dem Anschluss für den/die Druckbehälter einen mit einem Kühlmittel, vorzugsweise flüssigem Stickstoff, betriebenen Wärmetauscher, der das Füllgas auf zumindest annähernd die Temperatur des Kühlmittels, also beispielsweise die Temperatur des flüssigen Stickstoffs, abkühlt.

Bevorzugte Verwendungen des erfindungsgemäßen Verfahrens liegen in der Befüllung von Druckbehältern, z.B. Fahrzeugtanks oder Energiespeicher für Mobilfunkgeräte oder Laptops. Brennstoffzellen-Antriebe werden zunehmend als ernstzunehmende Alternative zu herkömmlichen Antrieben für Fahrzeuge gesehen. Die Brennstoffzelle benötigt als Reaktanden einen chemischen Energieträger, üblicherweise Wasserstoff, und Sauerstoff. Während der Sauerstoff, ähnlich wie beim Verbrennungsmotor, meist aus der Luft der Umgebung entnommen werden kann, werden für den Wasserstoff Speichersysteme benötigt. Dabei wird der Wasserstoff entweder unmittelbar oder als Bestandteil eines anderen Stoffes, etwa Methanol oder Erdgas, gespeichert. Während jedoch die Speicherung des Wasserstoffs in Form von Methanol ein relativ komplexes und teures System zur Nutzbarmachung der Wasserstoffenergie (Reformer) erfordert, sind Systeme, die den Wasserstoff unmittelbar, insbesondere gasförmig unter Druck speichern, einfacher im Aufbau und im Einsatz. Kleinvolumige Brennstoffzellen können beispielsweise als ideale Energiequellen für Laptops oder Mobiltelefone dienen.

Anhand der Zeichnung soll nachfolgend ein Ausführungsbeispiel der Erfindung näher erläutert werden.

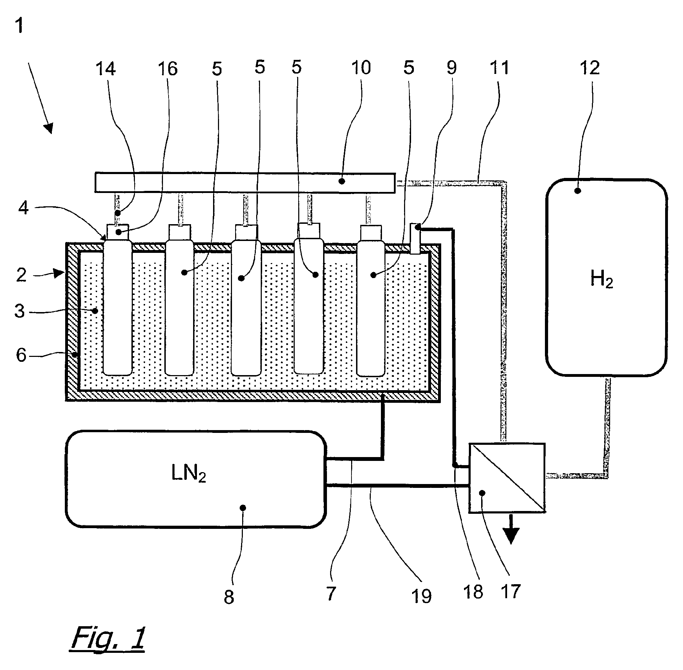

Die einzige Zeichnung (Fig. 1) zeigt schematisch eine Vorrichtung zum Befüllen von Druckbehältern mit Wasserstoff.

Die Vorrichtung 1 umfasst ein Kältemittelbad 2 in dessen oberen Bereich Zuführöffnungen 4 für zu befüllende Druckbehälter 5 vorgesehen sind. Das Kältemittelbad 2 ist über eine Zuleitung 7 mit einem Tank 8 für flüssigen Stickstoff strömungsverbunden. Im Betriebszustand wird das Kältemittelbad 2 derart mit flüssigem Stickstoff 3 befüllt, dass nach dem Einführen der Druckbehälter 5 diese zumindest überwiegend von flüssigem Stickstoff 3 umströmt werden. Die Außenwände des Kältemittelbades sind mit einer Wärmisolation 6 versehen, durch die ein rasches Verdampfen des Flüssigstickstoffs 3 aus dem Kältemittelbad 2 verhindert wird. Zum Ableiten von verdampftem Stickstoff dient eine Gasableitung 9.

Beabstandet von den Zuführöffnungen 4 des Kältemittelbades 2 ist eine Anschlussarmatur 10 angeordnet, die über eine Füll-Leitung 11 mit einem Wasserstoffvorrat 12 in Strömungsverbindung steht. Als Wasserstoffvorrat 12 kann beispielsweise ein Drucktank vorgesehen sein, in dem der Wasserstoff bei Raumtemperatur unter hohen Drücken, beispielsweise 200 bar, gespeichert wird, oder auch ein wärmeisolierter Mitteldrucktank, der mit verflüssigtem Wasserstoff gefüllt ist. Die Anschlussarmatur 10 ist mit einem oder mehreren Füllschläuchen 14 versehen, die mit den Druckbehältern 5 lösbar verbunden werden können. Die Zahl der Füllschläuche 14 richtet sich nach der maximalen Anzahl der an die Anschlussarmatur 10 anschließbaren Druckbehälter 5. Im Ausführungsbeispiel sind also insgesamt fünf Füllschläuche 14 vorhanden.

Beim bestimmungsgemäßen Einsatz der Vorrichtung 1 werden die zu befüllenden Druckbehälter 5 in die Zuführöffnungen 4 des mit flüssigem Stickstoff 3 gefüllten Kältemittelbades 2 eingeschoben und in hier nicht gezeigter Weise lösbar fixiert. Beim Einführen der Druckbehälter 5 aus dem Kältemittelbad 2 verdampft ein Teil des flüssigen Stickstoffs 3 und wird über die Gasableitung 9 abgeführt. Er wird durch flüssigen Stickstoff ersetzt, der dem Tank 8 entnommen wird. Im Betriebszustand des Kältemittelbades 2 werden die Druckbehälter 5 weitgehend von flüssigem Stickstoff 3 umspült.

Anschließend werden die Druckbehälter 5 mit den Füllschläuchen 14 verbunden und Ventile 17 an den Druckbehältern 5 geöffnet. Der zur Befüllung der Druckbehälter 5 bestimmte Wasserstoff wird dem Wasserstoffvorrat 12 entnommen. Er kann in einem Wärmetauscher 16 vorgekühlt werden. Der Wärmetauscher 16 wird dabei entweder mit flüssigem Stickstoff betrieben, der beispielsweise dem Tank 8 unmittelbar über eine Leitung 19 entnommen werden kann, oder mit kaltem gasförmigem Stickstoff aus der Verdampfung im Kältemittelbad 2, der durch eine Strömungsverbindung 18 mit der Gasableitung 9 mit herangeführt wird. Durch letzteres wird die Kälteenergie des Stickstoffs besser ausgenutzt und damit die Wirtschaftlichkeit des Verfahrens erhöht.

Es ist auch möglich, den Wasserstoff in kaltem gasförmigem oder flüssigen Zustand aus einem Mitteldrucktank zu entnehmen. In diesem Falle ist die Zwischenschaltung eines Wärmetauschers 17 entbehrlich.

Vorzugsweise steht der Wasserstoff im Wasserstoffvorrat 12 unter Druck und/oder wird vor Erreichen der Anschlussarmatur 10 durch geeignete Mittel, beispielsweise Kompressoren, auf einen gewissen Fülldruck gebracht. Es ist auch vorstellbar einen bereits in der Vorrichtung 1 auf Hochdruck befüllten Druckbehälter 5 als Wasserstoffvorrat 12 für die Befüllung weiterer, vorzugsweise kleinerer Druckbehälter einzusetzen.

Der Wasserstoff strömt durch die Anschlussarmatur 10 in die Füllschläuche 14 und von dort in die Druckbehälter 5. Infolge der Kühlung im Wärmetauscher 17 bzw. durch Kontakt mit den auf Stickstofftemperatur gebrachten Druckbehältern 5 komprimiert der Wasserstoff stark. Der Befüllvorgang kann jederzeit, noch vor Erreichen eines Druckgleichgewichtes zwischen Druckbehälter 5 und Wasserstoffvorrat 12 beendet werden. Nach Beendigung des Befüllvorgangs werden die Ventile 16 geschlossen und die Druckbehälter dem Kältemittelbad 2 entnommen. Infolge der anschließenden Erwärmung der Druckbehälter 5 auf Außentemperatur erfolgt in den Behältern ein starker Druckanstieg auf einen Betriebsdruck von z.B. 400 bis 1200 bar, der mit konventioneller Kompressionstechnik nur unter unverhältnismäßig hohem Aufwand bewerkstelligt werden kann.

Das Verfahren ermöglicht eine außerordentlich schnelle Befüllung der Druckbehälter; Effekte, die bei Verfahren nach dem Stande der Technik durch die Erwärmung des eingefüllten Kaltgases infolge des Kontakts mit dem warmen Behälter die Kompression des Gases mindern, werden vermieden. Die Vorrichtung eignet sich insbesondere zum Befüllen von Fahrzeugtanks. Derartige Tanks, die bei einem Mittelklasse-Pkw ein Fassungsvermögen von 100l bis 500l aufweisen können, können beispielsweise in voneinander trennbare Module unterteilt sein, die jeweils ein Fassungsvermögen von 10 - 50l besitzen. Zum Befüllen werden die Module jeweils in ein Bad mit flüssigem Stickstoff eingetaucht und mit einem gasförmigem Kraftstoff, beispielsweise Wasserstoff oder Erdgas, befüllt. Eine andere Verwendungsmöglichkeit für die erfindungsgemäße Vorrichtung ist die Befüllung kleinvolumiger Druckbehälter oder Kartuschen für Brennstoffzellensysteme, die als Stromquellen beispielsweise für Mobiltelefone oder mobile Rechner einsetzbar sind.

### Beispiel:

Es wird Wasserstoff aus einem 200 bar- Flaschenbündel als Wasserstoffvorrat 12 in einen 10l fassenden Druckbehälter 5 eingeleitet. Der Druckbehälter 5 ist während des Befüllvorgangs in flüssigem Stickstoff mit einer Temperatur von ca. 77 K (-196°C) eingetaucht. Eine Vorkühlung des eingeleiteten Wasserstoffes ist dabei nicht grundsätzlich erforderlich, aber geeignet, die Wirtschaftlichkeit zu erhöhen. Der Wasserstoff aus dem Vorrat strömt durch das geöffnete Ventil 16 in den aufnehmenden Druckbehälter 5 und kühlt sich in diesem ab. Nach ca. 2 Minuten stellt sich zwischen dem Flaschenbündel und dem Druckbehälter ein Druckausgleich ein maximal mögliche Wasserstoffdichte ist im Druckbehälter erreicht. Der Befüllvorgang wird durch Absperren des Ventils 16 beendet. Anschließend wird der Druckbehälter aus dem Kältemittelbad genommen. Bei der anschließenden Erwärmung des Druckbehälters auf Außentemperatur wird ein Druck im Druckbehälter von ca. 1000 bar erreicht.

### Bezugszeichenliste

- 1.: Wasserstoffspeichersystem
- 2.: Kältemittelbad
- 3.: flüssiger Stickstoff
- 4.: Zuführöffnungen
- 5.: Druckbehälter
- 6.: Wärmeisolation
- 7.: Zuleitung
- 8.: Tank
- 9.: Gasableitung
- 10.: Anschlussarmatur
- 11.: Füll-Leitung
- 12.: Wasserstoffvorrat
- 13.: -
- 14.: Füllschlauch
- 15.: -
- 16.: Ventile
- 17.: Wärmetauscher
- 18.: Strömungsverbindung
- 19.: Leitung

## Patentansprüche

1. Verfahren zum Befüllen von Druckbehältern (5) mit einem tiefsiedenden, permanenten Gas oder Gasgemisch, bei dem ein Gas oder Gasgemisch als Füllgas einem Druckbehälter (5) zugeführt wird, wobei der Druckbehälter (5) vor und/oder während der Zuführung des Füllgases gekühlt wird und das Füllgas in dem Druckbehälter (5) durch Abkühlung verdichtet wird, **dadurch gekennzeichnet, dass** das Füllgas innerhalb des Druckbehälters (5) in gasförmigem Zustand gelagert wird.

2. Verfahren nach Anspruch 1, **dadurch gekennzeichnet, dass** das Füllgas vor der Zuführung an den Druckbehälter (5) in einem Vorkühler (17) gekühlt wird.

3. Verfahren nach einem der vorhergehenden Ansprüche, **dadurch gekennzeichnet, dass** das Füllgas unter einem vorgegebenen Fülldruck, vorzugsweise von mehr als 100bar, dem Druckbehälter (5) zugeführt wird.

4. Verfahren nach einem der vorhergehenden Ansprüche, **dadurch gekennzeichnet, dass** der Druckbehälter (5) vor der Zuführung des Füllgases in einem Kältemittelbad (2) mit flüssigem Stickstoff (3) gekühlt und **dadurch** zumindest annähernd auf die Temperatur flüssigen Stickstoffs gebracht wird.

5. Verfahren nach einem der vorhergehenden Ansprüche, **dadurch gekennzeichnet, dass** das Füllgas durch den Wärmekontakt mit dem Druckbehälter (5) und/oder im Vorkühler (17) auf eine Temperatur oberhalb seines Siedepunktes abgekühlt wird.

6. Verfahren nach einem der Ansprüche 1 bis 5, **dadurch gekennzeichnet, dass** die Druckbehälter (5) Druckbehälter für Brennstoffzellen und/oder für mit gasförmigem Kraftstoff betriebene Fahrzeuge sind.

## Claims

1. Method for filling pressure vessels (5) with a low-boiling, permanent gas or gas mixture, in which a gas or gas mixture is supplied as filling gas to a pressure vessel (5), with the pressure vessel (5) being cooled before and/or during the supplying of the filling gas and the filling gas in the pressure vessel (5) being compressed by cooling, **characterized in that** the filling gas is stored in the gaseous state within the pressure vessel (5).

2. Method according to Claim 1, **characterized in that** the filling gas is cooled in a pre-cooler (17) before it is supplied to the pressure vessel (5).

3. Method according to one of the preceding claims, **characterized in that** the filling gas is supplied to the pressure vessel (5) at a predetermined filling pressure, preferably of more than 100 bar.

4. Method according to one of the preceding claims, **characterized in that** the pressure vessel (5) is cooled in a refrigerant bath (2) containing liquid nitrogen (3) before the filling gas is supplied, and as a result is at least approximately brought to the temperature of liquid nitrogen.

5. Method according to one of the preceding claims, **characterized in that** the filling gas is cooled to a temperature above its boiling point as a result of the thermal contact with the pressure vessel (5) and/or in the pre-cooler (17).

6. Method according to one of Claims 1 to 5, **characterized in that** the pressure vessels (5) are pressure vessels for fuel cells and/or for vehicles which are operated with gaseous fuel.

## Revendications

1. Procédé en vue du remplissage de réservoirs sous pression (5) avec un gaz ou un mélange de gaz permanent à point d'ébullition bas, dans le cas duquel un gaz ou un mélange de gaz est alimenté en tant que gaz de remplissage à un réservoir sous pression (5), le réservoir sous pression (5) étant refroidi avant et/ou pendant l'alimentation du gaz de remplissage et le gaz de remplissage dans le réservoir sous pression (5) étant comprimé par refroidissement, **caractérisé en ce que** le gaz de remplissage est stocké au sein du réservoir sous pression (5) à l'état gazeux.

2. Procédé selon la revendication 1, **caractérisé en ce que** le gaz de remplissage est refroidi dans un refroidisseur préalable (17) avant l'alimentation au réservoir sous pression (5).

3. Procédé selon l'une quelconque des revendications précédentes, **caractérisé en ce que** le gaz de remplissage est alimenté au réservoir sous pression (5) sous une pression de remplissage prédéterminé de préférence de plus de 100 bars.

4. Procédé selon l'une quelconque des revendications précédentes, **caractérisé en ce que** le réservoir sous pression (5) est refroidi à l'aide d'azote liquide (3) avant l'alimentation du gaz de remplissage dans un bain de réfrigérant (2) et est de ce fait amené au moins approximativement à la température de l'azote liquide.

5. Procédé selon l'une quelconque des revendications précédentes, **caractérisé en ce que** le gaz de remplissage est refroidi à une température au dessus de son point d'ébullition par un contact thermique avec le réservoir sous pression (5) et/ou dans le refroidisseur préalable (17).

6. Procédé selon l'une quelconque des revendications 1 à 5, **caractérisé en ce que** les réservoirs sous pression (5) sont des réservoirs sous pression pour piles à combustibles et/ou pour des véhicules fonctionnant à l'aide de carburant gazeux.
